(19) Europäisches Patentamt
European Patent Office
Office européen des brevets

(11) EP 0 586 269 B1

(12) # FASCICULE DE BREVET EUROPEEN

(45) Date de publication et mention de la délivrance du brevet: **24.09.1997 Bulletin 1997/39**

(51) Int Cl.[6]: **C08G 77/60**, C08J 5/24, C08L 83/16

(21) Numéro de dépôt: **93401790.6**

(22) Date de dépôt: **08.07.1993**

(54) **Procédé de préparation d'un polysilane réticulé par rayonnement ionisant et procédé de fabrication d'un matériau composite à matrice de polysilane**

Verfahren zur Herstellung eines durch ionisierende Strahlung härtbaren Polysilans und zur Herstellung eines eine Polysilanmatrix enthaltenden Verbundwerkstoffs

Process for preparing polysilanes curable by ionizing radiation and process for making a polysilane matrix containing composite material

(84) Etats contractants désignés:
**BE CH DE ES GB IT LI NL SE**

(30) Priorité: **10.07.1992 FR 9208584**

(43) Date de publication de la demande:
**09.03.1994 Bulletin 1994/10**

(73) Titulaire: **AEROSPATIALE Société Nationale Industrielle**
**75781 Paris Cédex 16 (FR)**

(72) Inventeurs:
- **Beziers, Daniel**
  **F-33160 Saint Medard en Jalles (FR)**
- **Chataignier, Evelyne**
  **F-33160 Saint Medard en Jalles (FR)**
- **Noireaux, Patrick**
  **F-72000 Le Mans (FR)**

(74) Mandataire: **Dubois-Chabert, Guy et al**
**Société de Protection des Inventions**
**25, rue de Ponthieu**
**75008 Paris (FR)**

(56) Documents cités:
**EP-A- 0 280 387**
**EP-A- 0 337 832**
**EP-A- 0 444 555**
**FR-A- 2 564 029**
**FR-A- 2 620 123**
**FR-A- 2 642 080**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

EP 0 586 269 B1

## Description

La présente invention a pour objet un procédé de préparation d'un polysilane réticulé par rayonnement ionisant. Ce procédé est utilisable en particulier pour la fabrication de pièces en matériau composite polymérisé et/ou réticulé sous rayonnement ionisant, devant résister à des températures élevées (typiquement supérieures à 350°C).

Les matériaux composites auxquels s'applique l'invention sont des matériaux constitués d'une résine organique et d'éléments non miscibles destinés à leur conférer des propriétés particulières. Ces matériaux sont constitués notamment d'un renfort fibreux, minéral ou organique, assurant la résistance et la rigidité des pièces et d'une matrice organique assurant la liaison entre les fibres de renfort ainsi que le transfert des efforts entre ces fibres.

Ces dernières peuvent être en verre, silice, carbone, alumine, aramide.

Ces matériaux composites peuvent être utilisés dans de nombreux secteurs industriels, notamment spatial, aéronautique, automobile, nautique et dans le domaine des sports de compétition. De façon générale, ces matériaux composites peuvent être utilisés pour la réalisation de pièces mécaniques légères de haute tenue mécanique et thermique.

Les matrices organiques actuellement utilisées pour la fabrication de ces matériaux composites sont des résines thermodurcissables polymérisées et/ou réticulées sous de fortes pressions et de hautes températures nécessitant l'emploi d'un autoclave.

Ces procédés de polymérisation à chaud conduisent à des matériaux présentant des défauts dus aux effets thermiques tels que des contraintes internes, des micro-fissurations et des délaminages. En outre, le temps de polymérisation est extrêmement long, entraînant de lourdes conséquences financières du point de vue investissement et consommation d'énergie.

Les procédés de polymérisation par rayonnement tels que X, gamma et électron permettent une polymérisation et/ou réticulation sans élévation de température. Ils permettent l'obtention de matériaux composites de très bonne qualité en un temps relativement court et en utilisant des énergies relativement faibles.

Par ailleurs, ces procédés de polymérisation à froid sont compatibles avec tous les types de fibres entrant dans la composition des matériaux composites.

Un procédé de polymérisation et de réticulation de résine thermodurcissables à terminaison acrylique par rayonnement ionisant pour la fabrication de pièces en matériau composite est en particulier décrit dans le document FR-A-2 564 029.

Si l'on soumet une résine thermodurcissable à une température supérieure à sa température de transition vitreuse, cette résine perd définitivement toutes ses propriétés mécaniques. Aussi, les résines thermodurcissables ne peuvent être utilisées que pour des températures inférieures à leur température de transition vitreuse.

Les résines thermodurcissables polymérisables sous rayonnement ionisant, couramment utilisées dans les matériaux composites, sont les résines époxy à terminaison acrylique.

Or, les résines époxy connues les plus performantes d'un point de vue mécanique et thermique présentent des températures de transition vitreuse de l'ordre de 200°C ; leur utilisation est donc limitée à des applications basses températures et en particulier inférieures à 180°C.

Il est en outre connu par les documents FR-A-2 616 152 et FR-A-2 642 080 des compositions réticulables thermiquement à base de polysilanes, utilisables telles quelles ou transformées en carbure de silicium par traitement thermique. Les températures de polymérisation sont élevées de 250°C à 300°C.

Ces polysilanes sont caractérisés par une chaîne principale faite d'une succession d'atomes de silicium conférant à ces polymères des propriétés particulières.

Ces polysilanes réticulés par voie thermique présentent les inconvénients mentionnés ci-dessus et liés en particulier à ce type de polymérisation. De plus, on constate que la polymérisation se fait avec une perte de masse non négligeable (de l'ordre de 8%) et qu'il est pratiquement impossible de réaliser des pièces de dimensions élevées aussi bien en épaisseur qu'en longueur.

En outre, les résines obtenues sont instables et notamment oxydables à l'air libre, ce qui exige une mise en oeuvre pour la fabrication de pièces et la cuisson sous atmosphère inerte ; cette instabilité est exacerbée par la température.

L'invention a pour objet un procédé de préparation d'un polysilane réticulé ne présentant pas les inconvénients mentionnés ci-dessus. Il permet en particulier la réalisation de pièces de dimensions importantes sans difficulté de mise en oeuvre particulière.

L'invention a pour objet un nouveau procédé de préparation d'un polysilane réticulé permettant l'obtention de polysilanes à haute tenue mécanique et thermique, utilisables dans des applications exigeant ces propriétés. En particulier, ces polysilanes sont destinés à constituer la matrice d'un matériau composite à renfort fibreux de haute performance.

Un premier objet de l'invention se rapporte à un procédé de préparation d'un polysilane réticulé, caractérisé en ce que l'on soumet à un rayonnement ionisant choisi parmi les rayons X et un bombardement électronique une formulation réticulable par rayonnement ionisant comprenant au moins un polysilane à au moins une terminaison vinylique.

Ce procédé permet d'obtenir, à des températures n'excédant pas 100°C et en un temps très court, des résines polysilanes à faibles contraintes internes, et exemptes de micro-fissuration. Ce procédé se fait sans perte de masse, c'est-à-dire avec un taux de matières extractibles au reflux du toluène et déterminé à partir d'une résine ou matériau ionisé, <1%.

Afin d'adapter la viscosité des formulations réticulables et de faciliter leur mise en oeuvre, il est avantageux d'utiliser au moins un diluant réactif à terminaison vinylique copolymérisable avec le polysilane sous rayons X ou bombardement électronique.

De façon générale, ce ou ces diluants réactifs comportent chacun une chaîne carbonée principale de 1 à 20 atomes de carbone et peuvent être utilisés dans des proportions allant de 1 à 40 parties en poids pour 100 parties en poids de formulation.

Comme diluants réactifs utilisables dans l'invention, on peut citer des monomères tels que le divinylbenzène (DVB) ou la N-vinylpyrrolidone-2 (NVP).

Ces diluants peuvent être utilisés seuls ou en combinaison et leur choix dépend essentiellement de l'application envisagée.

Ces diluants réactifs en plus de l'adaptation de la viscosité, permettent de réduire l'oxydabilité de certaines formulations à base de polysilane.

En vue de réduire cette oxydabilité, il est en outre possible d'ajouter à la formulation des inhibiteurs radicalaires tels que les phénols. En particulier, on peut ajouter du ionol ou plus exactement du butyl-2,6-méthyl-4 phénol à des concentrations de 50 à 300 ppm.

En vue d'adapter les propriétés mécaniques et thermiques des polysilanes réticulés et notamment leur température de transition vitreuse, il est possible d'utiliser d'autres additifs potentiellement réactifs sous rayons X ou bombardement électronique à terminaison vinylique comme par exemple des silazanes vinyliques, des résines bismaléimide ou leurs mélanges.

Les silazanes ont une structure proche de celle des polysilanes et comportent du fait de la présence du silicium, une température de transition vitreuse élevée améliorant celle de la formulation réticulée. Ils présentent une formule du type (A) :

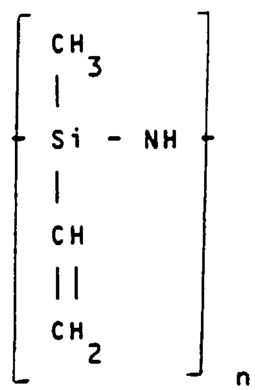

(A)

avec n allant de 1 à 5 et par exemple valant 3 ou 4.

La quantité d'additif utilisée est fonction des propriétés souhaitées ; elle peut aller de 1 à 70 parties en poids, pour chaque additif, pour 100 parties en poids de polysilane.

Le procédé de préparation d'un polysilane réticulé tel que décrit précédemment est parfaitement bien adapté à la fabrication de pièces en matériau composite, notamment en renfort fibreux. Ces pièces peuvent être obtenues par coulée, bobinage filamentaire, drapage uni ou multidirectionnel, préimprégnation, injection.

Aussi, l'invention a encore pour objet un procédé de fabrication d'un matériau composite à fibres de renfort noyées dans une matrice organique, consistant à imprégner les fibres d'une formulation réticulable par rayonnement ionisant contenant au moins un polysilane à au moins une terminaison vinylique et à soumettre les fibres imprégnées à un rayonnement ionisant choisi parmi les rayons X et un bombardement électronique.

Les formulations utilisées sont les mêmes que celles décrites précédemment.

La polymérisation et/ou réticulation du matériau composite peut être mise en oeuvre avec les moyens connus et en particulier en utilisant le dispositif de polymérisation et de réticulation par rayons X ou bombardement électronique décrit dans le document FR-A-2 564 029.

Les fibres peuvent être tissées, tressées ou bobinées et réalisées en verre, silice, carbone, alumine, aramide.

Pour la fabrication de pièces en matériaux composites, il existe deux méthodes pour déposer le liant organique

destiné à former la matrice sur les fibres. La première méthode consiste à réaliser une préforme fibreuse de la pièce puis à introduire dans cette préforme le liant destiné à former la matrice. La seconde méthode consiste à imprégner chaque fibre de liant destinée à former la matrice puis à réaliser une préforme de la pièce avec les fibres imprégnées.

L'invention s'applique à ces deux techniques de dépôt de liant sur les fibres.

Les doses d'irradiation utilisées pour la polymérisation et/ou réticulation de la formulation ainsi que celles utilisées pour la polymérisation et récitulation d'un matériau composite sont importantes et se situent dans la gamme de 200 à 500kGy ou mieux de 300 à 500kGy.

Ces doses d'irradiation sont obtenues en faisant passer sous un accélérateur de particules la formulation souhaitée à une vitesse qui est inversement proportionnelle à la dose désirée et qui dépend des caractéristiques de l'accélérateur.

Pour un accélérateur d'électrons de 10MeV et d'une puissance de 20kW, on obtient, dans une formulation ou pièce en matériau composite située à 40cm de la sortie de l'accélérateur, pour une vitesse de défilement de 1m/min, une dose de 25 kGy en électrons.

Les doses nécessaires se faisant à des vitesses lentes, et comme par ailleurs elles sont cummulatives, on effectue plusieurs passages à des doses allant de 10 à 50kGy pour chaque passage.

L'invention a aussi pour objet un procédé de fabrication d'un polysilane apte à polymériser sous rayons X ou bombardement électronique.

Selon l'invention, les polysilanes sont obtenus en effectuant les étapes suivantes :

a) - faire réagir en phase liquide un composé $RoY^1$ en présence d'un métal alcalin fondu avec au moins un premier monomère ayant au moins une fonction vinylique de formule (I) :

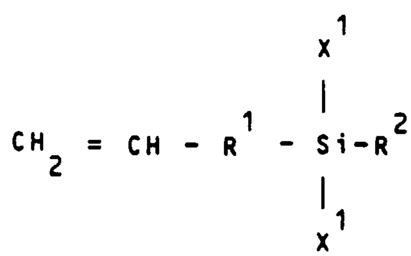

(I)

pour former au moins un polysilane halogéné à fonction vinylique, soluble dans la phase liquide, avec $X^1$ et $Y^1$ identiques ou différents représentant un atome d'halogène, $R^1$ représentant une liaison covalente simple ou un radical hydrocarboné saturé ou insaturé, substitué ou non, Ro représentant un radical hydrocarboné saturé ou insaturé éventuellement silicié et $R^2$ représentant un atome d'hydrogène ou un radical hydrocarboné saturé ou insaturé, substitué ou non ;

b) - séparer la phase liquide des phases solides ;

c) - réaliser une substitution nucléophile des atomes d'halogène du polysilane dissous dans la phase liquide, et

d) - extraire le polysilane substitué de la phase liquide.

L'étape a) consiste en une duplication réductrice en présence d'un métal alcalin tel que le sodium, consistant en une polycondensation des comonomères entre eux avec formation d'halogénures alcalins correspondants. Le sodium est préféré car il favorise la formation de produits linéaires et n'attaque peu ou pas du tout les éventuelles liaisons Si-H des monomères utilisés.

L'étape a) est réalisée en milieu solvant anhydre, inerte, vis-à-vis des monomères utilisés et présente une température d'ébullition supérieure à celle du métal alcalin utilisé. Pour le sodium, le solvant doit présenter une température d'ébullition supérieure ou égale à 100°C.

Les solvants utilisés sont les mêmes que ceux décrits précédemment dans les documents FR-A-2 616 152 et FR-A-2 642 080. En particulier, on utilise le toluène et les alcanes lourds, c'est-à-dire des alcanes ayant au moins 8 atomes de carbone. Un solvant donneur d'électrons peut éventuellement être ajouté tel que le dioxane ou le tétrahydrofuranne (THF) et autres éthers.

La copolymérisation s'effectue en atmosphère inerte d'azote ou de gaz rare tel que l'argon à pression atmosphérique et à une température allant de 90 à 140°C selon le métal alcalin et les solvants choisis assurant ainsi la dispersion de ce métal alcalin fondu sous forme de fines billes dans le solvant.

Quel que soit le choix des monomères engagés, le milieu réactionnel final est constitué de deux phases : une phase liquide contenant les solvants et monomères résiduels dans laquelle est dilué un mélange de polysilanes solubles résultant de la duplication et une phase solide dispersée dans la phase liquide renfermant principalement les sels minéraux tels que des halogénures de métal alcalin ainsi que le métal alcalin non consommé avec, en complément,

une fraction solide insoluble de polysilane issue d'une réaction parasite mais largement minoritaire. D'où la nécessité de séparer ces phases (étape b).

En outre, quels que soient les monomères engagés, on ne peut pas éviter la présence de liaisons Si-halogénure dans les polysilanes solubles ainsi que d'autres entités à base d'halogène sous forme ionique complexe ou non. Il est donc nécessaire de réaliser une substitution nucléophile des atomes d'halogène présents sur le polysilane (étape c).

Dans la pratique, la duplication réductrice d'halogénosilane par un métal alcalin dans les conditions ci-dessus se traduit par une excellente consommation de ce métal et conduit à un polysilane présentant une teneur modérée en groupe halogéno.

Typiquement, on peut estimer que la teneur en atomes d'halogène est inférieure à 30% en poids, ce pourcentage étant pris par rapport au poids de l'extrait sec issu de la solution filtrée à partir du milieu réactionnel.

Cette substitution peut être réalisée conformément à l'art antérieur en effectuant une hydrolyse comme décrit dans le document US-A-4 783 516.

Cependant, l'action de l'eau vis-à-vis de groupes halogénosilanes constitue une action non sélective et non limitée pouvant induire une duplication, voire provoquer une réticulation ou une gélification et conduire à des composés présentant des liaisons Si-O-Si-.

Aussi, est-il préférable, selon l'invention, de soumettre la phase liquide contenant les polysilanes à l'action de réactifs spécifiques assurant une substitution des groupes halogéno en totalité par des groupes nucléophiles non susceptibles de réaction ultérieure dans des conditions usuelles de température et d'atmosphère.

Ces réactifs spécifiques sont des organométalliques et avantageusement des organomagnésiens (ou réactif de Grignard) de formule $RMgY^2$ ou des organolithiés RLi où R représente un radical hydrocarboné saturé ou insaturé, substitué ou non et $Y^2$ représente un atome d'halogène.

La substitution des halogènes des polysilanes par des organométalliques s'effectue préférentiellement en additionnant le dérivé halogéné en solution sur une solution contenant le réactif organométallique. Toutefois, la réaction inverse est tout à fait envisageable.

R représente avantageusement un radical hydrocarboné à terminaison vinylique ou de faible encombrement comme le groupement méthyle. Toutefois, d'autres radicaux peuvent être envisagés, comme les groupements éthyle, phényle.

Les réactions de substitution sont conduites à des températures allant de 0 à 100°C selon le protocole usuel de ces réactifs.

Les polysilanes issus du traitement par un organomagnésien ou un organolithié présentent une excellente stabilité à l'atmosphère ambiante et sont en particulier peu oxydables ainsi qu'une grande stabilité vis-à-vis de l'hydrolyse. En outre, on observe une amélioration des propriétés thermiques. En particulier, la température mesurée par TGA (ou thermogravimétrie), toutes choses égales par ailleurs, augmente. La température mesurée par TGA indique la température de décomposition du produit.

Ce traitement par organométallique permet en outre d'éviter l'emploi d'inhibiteurs radicalaires. En particulier, ces polysilanes peuvent être abandonnés plusieurs heures à l'air ambiant à des températures pouvant aller jusqu'à 70°C sans subir aucune altération de nature oxydante.

De façon avantageuse, l'étape a) de duplication réductrice est réalisée en présence d'un second monomère ayant au moins une liaison Si-H de formule (II) :

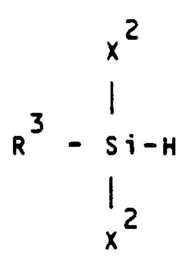

(II)

dans laquelle $X^2$ est un halogène et $R^3$ un atome d'hydrogène ou un radical hydrocarboné, saturé ou non, substitué ou non.

L'emploi de monomères à liaison Si-H améliore la polymérisation par rayons X ou bombardement électronique.

Des études ont permis de montrer que le rapport des fonctions $Si\text{-}CH{=}CH_2/Si\text{-}H$ est avantageusement compris entre 2 et 3,3.

De préférence, $R^3$ est un radical hydrocarboné non substitué, saturé ou non. De plus, des études ont montré qu'il était préférable d'espacer les liaisons SiH les unes des autres.

Afin d'espacer les liaisons SiH, il est possible de réaliser l'étape a) en présence d'un troisième monomère de

formule (III) :

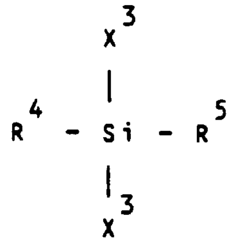 (III)

dans laquelle $R^4$ et $R^5$ qui peuvent être identiques ou différents représentent un atome d'hydrogène, un radical hydrocarboné saturé ou insaturé, substitué ou non.

Selon l'invention, les atomes d'halogène $Y^1$, $Y^2$, $X^1$, $X^2$, et $X^3$, peuvent être identiques ou différents et représenter un atome de fluor, de chlore, de brome ou d'iode.

Les radicaux hydrocarbonés de l'invention peuvent avoir de 1 à 20 atomes de carbone et lorsqu'ils sont non substitués, être du type alkyle, aryle ou alcényle. Ces radicaux sont en particulier le méthyle, l'éthyle, le phényle, ou encore des radicaux à terminaison vinylique ($CH_2$=CH-) ou allylique ($CH_2$=CH-($CH_2$)p avec p valant de 1 à 6).

Lorsqu'ils sont substitués, les substituants utilisables sont du type éther, thioéther.

Le second monomère du fait des liaisons Si-H mais aussi les premier et troisième monomères permettent, si nécessaire, d'apporter des fonctions additionnelles au polysilane devant être réticulé, lorsque $R_2$, $R_4$ ou $R_5$ représentent H par greffage sur les liaisons Si-H du polymère comme décrit dans le document FR-A-2 616 152.

Ces fonctions sont en particulier des fonctions époxy

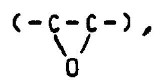

méthacryliques, esters (R-O-R avec R alkyle, aryle ou alcényle).

Afin d'optimiser la polymérisation et la réticulation par des rayons X ou un bombardement électronique, il est préférable d'utiliser comme composé $RoY^1$, qui est un composé d'extrémité de chaîne, un composé non silicié. En particulier, ce monomère non silicié est un halogénure de méthyle tel que $CH_3I$ du fait du faible encombrement du groupement méthyle.

Il est toutefois possible d'utiliser pour ce réactif d'extrémité de chaîne des composés dans lesquels Ro représente un groupement éthyle ou phényle. En outre, il est possible d'utiliser un matériau silicié comme le triméthylchlorosilane.

L'emploi d'un composé non silicié comme $CH_3I$ permet de modifier l'environnement stérique des groupes vinyle du premier monomère, situés en bout de chaîne. On obtient ainsi, pour $R^1$= une liaison simple et $R^2$=-$CH_3$, une duplication du type :

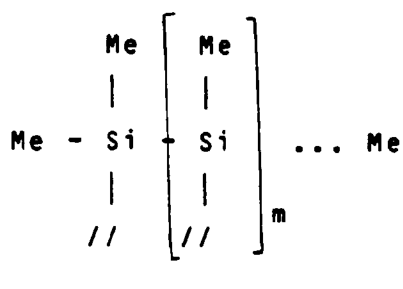

au lieu d'une duplication avec $RoY^1$ = $Me_3SiCl_2$ du type :

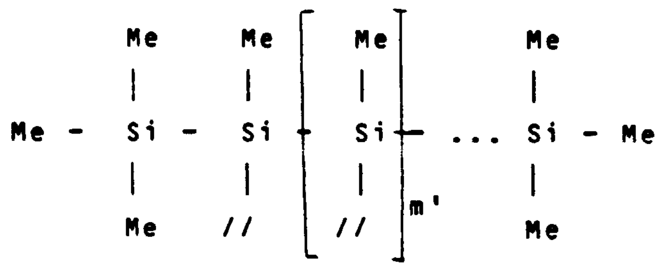

avec Me représentant le groupement méthyle et m et m' représentant des entiers allant de 1 à 20.

D'autres caractéristiques et avantages de l'invention ressortiront mieux de la description qui va suivre, donnée à titre illustratif et non limitatif, en référence aux figures annexées, dans lesquelles :

- la figure 1 illustre le dispositif permettant la fabrication des polysilanes réticulables par rayons X ou bombardement électronique, et
- la figure 2 illustre schématiquement une spectrométrie infrarouge à transformée de Fourier ou analyse FTIR illustrant la consommation des groupes vinyles d'un polysilane en fonction de la dose d'irradiation.

Différentes formulations à base de polysilane ont été réalisées en vue de leur réticulation sous rayons X ou bombardement électronique. Ces formulations ont été réalisées selon le protocole suivant, en référence à la figure 1.

L'appareillage représenté sur la figure 1, comporte deux réacteurs 10 et 12, par exemple en pyrex, thermostatés, mis en communication par une conduite 14.

La duplication réductrice des halogénosilanes est réalisée dans le réacteur 10 équipé à sa partie inférieure d'un disque fritté 16 de porosité voisine de 10µm. En outre, une agitation efficace 18, un système de réfrigération 20 à circulation d'eau, de capacité adaptée, et diverses entrées telles que 22, 24 et 26 pour respectivement l'introduction de monomères, de gaz inerte tel que l'azote et de mesures de températures complètent l'équipement. De plus, l'entrée 22 est équipée d'une pompe doseuse 27 pour permettre l'introduction en quantité bien définie des différents monomères à copolymériser.

Le réacteur 12 se différencie du réacteur 10 essentiellement par l'absence du disque fritté 16. Les autres éléments, identiques à ceux du réacteur 10, porteront les mêmes références.

Ce réacteur 12 est destiné à la substitution nucléophile puis à l'isolation du polysilane.

Les deux réacteurs sont placés sous atmosphère inerte et anhydre puis un mélange solvant toluène-dioxane 50/50 est introduit dans le réacteur 10 suivi de l'ajout de sodium en quantité voulue soit 1,05 équivalent par atome d'halogène.

L'ensemble est porté à la température de reflux des solvants, soit entre 100 et 110°C. Après fusion du sodium, une agitation efficace permet une dispersion en fines billes de ce métal. Le mélange des différents monomères halogénosilanes introduits en quantité bien définie dans un récipient isolé est additionné en 22 à un débit contrôlé dans le réacteur 10 par l'intermédiaire de la pompe doseuse 27.

Le débit de l'addition est réglé de manière à maintenir le mélange réactionnel à une température de 100 à 105°C. Après la fin de l'addition, le mélange réactionnel est ramené à la température ambiante, puis transvasé à travers le disque fritté 16 sous une légère dépression dans le second réacteur 12.

La phase liquide transvasée dans le réacteur 12 contient en particulier le polysilane recherché comportant quelques atomes d'halogène qui vont être substitués dans le réacteur 12. Il est alors soumis soit à l'hydrolyse, soit à l'action d'un réactif de Grignard tel que la bromure de vinyle ou méthyle magnésium, soit à l'action d'un organolithié.

La quantité voulue d'eau, de réactif de Grignard ou d'organolithié est additionnée goutte à goutte à 20°C à la solution toluénique de polysilane via la conduite 22 du réacteur 12.

Les étapes suivantes concernent l'isolement et le lavage du polysilane. L'isolement utilise la technique de distillation et le lavage est effectué avec de l'eau.

On décrit, ci-après, le protocole opératoire utilisé dans le cas d'une substitution nucléophile avec un réactif de Grignard.

Le réactif de Grignard est utilisé en solution 1M dans le tétrahydrofuranne THF à une concentration de 0,5 à 4 mol/l pour 1000g de polysilane brut halogéné véhiculé par la conduite 14. On observe alors un précipité intense. Pour compléter la réaction, le mélange est porté de 2 à 5 heures au reflux des solvants.

Après retour à température ambiante, une solution d'HCl 2N permet de dissoudre le sel formé. Après séparation par décantation, la solution organique est lavée plusieurs fois à l'eau jusqu'à obtention d'un pH neutre (6 à 8). Après séchage sur sulfate de sodium suivi d'une filtration, les solvants sont distillés. Un polysilane stable de faible viscosité est obtenu avec des rendements supérieurs 80%.

Le polysilane est alors soumis à un bombardement électronique ou à des rayons X à des doses allant de 200 à

500kGy par passages successifs de 10kGy sous un accélérateur d'électrons de 10 MeV d'une puissance de 20kW avec utilisation d'une cible de conversion lors de l'utilisation des rayons X, comme décrit dans le document FR-A-2 564 029.

a) - Réactif de fin de chaîne

EXEMPLES 1 et 2

Deux polysilanes ont été préparés comme décrit ci-dessus à partir du monomère vinylique :

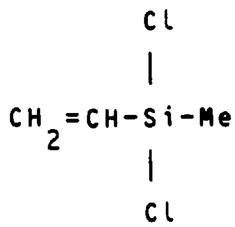 (formule I)

et du $MeSiHCl_2$ (formule II), dans un rapport de 3 monomères vinyliques pour 1 monomère hydrogéné, en présence de $Me_3SiCl$ ou de MeI (réactif $RoY^1$) à hauteur de 0,4 mol/l pour 1 mol/l du mélange des deux chlorosilanes. Me représente le radical méthyle.

Les deux produits obtenus ont été soumis à l'hydrolyse selon l'art antérieur décrite dans le document FR-A-2 642 080 puis analysés sous atmosphère contrôlée et inerte (azote) en vue de faire ressortir les avantages de l'emploi de MeI par rapport à l'emploi de $Me_3SiCl$. Les caractéristiques comparées de ces deux polysilanes sont données dans le tableau 1 ci-joint.

Ces polysilanes sont notés respectivement PVS1 ($Ro=SiMe_3$) et PVS2 (Ro=Me). Ils sont isolés avec des rendements voisins de 75% et présentent en analyse par chromatographie d'exclusion stérique (CES) et résonance magnétique nucléaire des protons ($RMN^1H$) des valeurs similaires. En revanche, l'analyse TGA après réticulation par bombardement électronique, noté EB à 400kGy par irradiations successives de 10kGy révèle deux points au bénéfice de l'emploi de MeI :

- un rendement pyrolytique amélioré de 69% au lieu de 62% et un début de pyrolyse vers 500°C au lieu de 400°C.

Les matières extractives sont inférieures à 1% après ionisation par bombardement électronique, à la dose de 400kGy.

L'extraction est effectuée dans du toluène porté au reflux pendant 4 heures après broyage du polysilane obtenu. Le pourcentage de matières extractibles représente le pourcentage de produits n'ayant pas réticulé.

Grâce à l'emploi d'un monomère de bout de chaîne non silicié, on obtient un polysilane à teneur en fonction $Si-CH=CH_2$ améliorée et donc mieux adapté à la réticulation par bombardement électronique.

Dans le tableau 1 $\overline{M}n$ représente la masse moyenne en nombre.

EXEMPLES a et b

Dans le tableau 1a, on montre encore l'influence de l'emploi de MeI à la place de $Me_3SiCl$ sur la production de liaison vinylique favorable à la polymérisation sous bombardement électronique. L'exemple a correspond à une copolymérisation de 72% en mole de $MeViSiCl_2$ avec 28% en mole de MeSiCl où $Vi=CH_2=CH-$ et l'exemple b à la copolymérisation du même composé vinylique avec MeI dans les mêmes proportions.

On constate en outre que la quantité de matières extractibles diminue après ionisation par des électrons de 400kGy, pour être inférieure à 1, lorsque l'on utilise le composé non silicié pour extrémité de chaîne.

b) - Réactif de Grignard

EXEMPLES 3 à 13

Différents polysilanes ont été préparés en présence de MeI pour des proportions variées de dichlorosilanes. Ces produits ont été soumis soit à l'hydrolyse, soit à l'action d'un réactif de Grignard. Les résultats sont portés dans le tableau 2.

Dans ce tableau, $\overline{M}w$ représente la masse moyenne en poids du polysilane, $\overline{M}n$ la masse en nombre, L représente le produit avant substitution nucléophile, LH représente le produit hydrolysé sans action de réactif de Grignard, Vi et Me étant les radicaux vinyle et méthyle.

On constate d'après ce tableau que pour des polysilanes du type PVS2 et PVSMe2, les valeurs initiales de dispersité $I=\overline{M}w/\overline{M}n$ déterminées par CES, comprises entre 2 et 5 pour les produits présents dans la solution brute, indiquées dans la colonne L sont conservées dès lors que l'on utilise les quantités de réactif de Grignard supérieures à 3 ou 4 équivalents pour 1000g de polysilane halogéné.

Par ailleurs, les inventeurs ont constaté que seuls les polysilanes traités par 3 ou 4 équivalents de $RMGY^2$ s'avèrent stables sans formation en surface d'une peau traduisant une réticulation par hydrolyse des entités SiCl lorsqu'ils sont exposés à l'atmosphère ambiant.

EXEMPLES 14 à 18

Des polysilanes de composition $RoY^1/MeViSiCl_2/MeHSiCl_2$ dans les proportions 28/54/18 ont été soumis soit à l'hydrolyse, soit à l'action du réactif de Grignard ViMgBr. Ces produits ont alors été abandonnés à l'air ambiant et on a suivi par spectroscopie infrarouge à transformée de Fourier (FTIR) l'évolution de l'oxydation des polysilanes selon le traitement final. Les résultats sont portés dans le tableau 3.

On constate que l'oxydation a lieu au bout de 15min environ pour des composés hydrolysés alors que celle-ci n'apparaît qu'au bout de 60min pour un traitement avec ViMgBr à une concentration de $0,5.10^{-3}$ mol/l et à un temps supérieur à 240min pour l'emploi de ce réactif à une concentration de $3.10^{-3}$ mol/l.

EXEMPLES 19 à 21

Un polysilane de même composition que les exemples 3 à 6 selon le protocole décrit précédemment a été filtré et obtenu selon un rendement supérieur à 80%.

Les traitements de cette solution brute par MeMgBr (Ex. 19) sur la base de 3 ou 4 équivalents pour 1000g de polysilane halogéné conduisent, après le lavage usuel en fin de traitement, à des produits dont l'analyse révèle l'absence d'évolution de masse moléculaire (déterminée par CES) mais présente une stabilité à l'air (déterminée par FTIR), vis-à-vis de l'oxydation ou durée de vie en pot plus faible que celle obtenue pour cette même solution brute traitée avec du ViMgBr (Ex. 20).

En revanche, on note une bonne conservation de la teneur en groupe vinyle au cours du temps, déterminée par $RMN^1H$.

Par ailleurs, la solution brute a été traitée par du butyllithium (exemple 21) sur la base de 4 équivalents pour 1000g de polysilane dans les mêmes conditions que celles utilisées lors de l'emploi du réactif de Grignard.

Ce traitement conduit à un produit stable, dont l'analyse CES met en évidence une légère augmentation des valeurs des masses moléculaires. En outre, il présente une bonne stabilité à l'air ambiant. En revanche, l'analyse par $RMN^1H$ indique une diminution de la teneur en vinyle par rapport à la solution brute.

Les résultats sont portés dans le tableau 4.

Dans ce tableau, Les chiffres paraîssant dans les colonnes intitulées "suivi d'oxydation" indiquent l'évolution de l'intensité de la bande C=0 liée à l'oxydation par rapport à celle de la bande SiH respectivement à 1700 et $2100cm^{-1}$.

Ainsi, afin de moduler la viscosité des polysilanes, il est possible de les soumettre à un mélange de réactif de Grignard et notamment de MeMgBr et ViMgBr. La viscosité augmente lorsque la quantité de MeMgBr augmente et lorsque la quantité de ViMgBr diminue.

c) - Fonction nécessaire à la réticulation

EXEMPLES 22 à 25 et CONTRE-EXEMPLE 1

Différents polysilanes ont été préparés à partir de $MeViSiCl_2$, $MeHSiCl_2$ et $Me_3SiCl$ dans les conditions décrites précédemment et dans des proportions variées et ont été soumis à une hydrolyse conformément à l'art antérieur. La teneur des fonctions Si-Vi et Si-H ont été déterminées à partir d'un spectre de $RMN^1H$ avant que le polysilane soit soumis à un bombardement électronique (EB) dans les conditions décrites ci-dessus.

Après un bombardement électronique avec une dose d'irradiation de 400kGy, les produits obtenus ont été soumis à une extraction au reflux par du toluène pendant 4 heures. Les pourcentages de matières extraites non réticulées sont donnés dans le tableau 5.

D'après ce tableau, on constate que les polysilanes exempts de fonction vinylique ne sont pas polymérisables ni réticulables sous bombardement électronique (voir contre-exemple 1). Il en est de même pour les rayons X.

On constate aussi que les polyvinylsilanes (exemples 22 à 25) sont polymérisables et réticulables sous bombardement électronique. En outre, l'exemple 22 associant les fonctions vinyles et SiH présente la plus faible teneur en résiduel non polymérisable.

De plus, des polysilanes obtenus à partir de composés exempts de fonction vinylique comme $Me_2SiCl_2$ ou $C_6H_5$-O-$(CH_2)_3$-$SiMeCl_2$ sont non réticulables sous bombardement électronique (ou rayons X).

Dans le cas des polyvinylsilanes de nature PVS et PVI, les matières non réticulées sont des oligomères de type tétra ou pentavinylsilane.

Les produits inertes sous bombardement électronique peuvent être éliminés du milieu réactionnel avant réticulation par volatilisation.

d) - Diluant réactif

Les exemples qui suivent concernent l'emploi d'un diluant réactif tel que la N-vinylpyrrolidone à des polysilanes à fonction vinylique.

EXEMPLES 26 et 27

On constate en particulier que les polysilanes obtenus par copolymérisation de $Me_3SiCl$ et de Me-Si-(CH=$CH_2$)$Cl_2$ traités avec la NVP conduisent à un meilleur rendement de polymérisation et à un taux de matières extractibles plus faible. Ceci apparaît dans le tableau 6.

La proportion de NVP indiquée correspond à des parties en poids pour 100 parties en poids de polysilane. Ce tableau fait en outre apparaître la nature des matières extractibles après un bombardement électronique de 400kGy.

Dans ces exemples 26 et 27, le polysilane est obtenu par copolymérisation de 72% en mole de $MeViSiCl_2$ et de 28% en mole de $Me_3SiCl$.

EXEMPLES 28 à 33

L'ajout de NVP améliore aussi les propriétés des polyvinylsilanes obtenus à partir d'une copolymérisation de $Me_3SiCl$, $MeViSiCl_2$ et de $MeHSiCl_2$. L'ajout d'un inhibiteur radicalaire du type ionol à ces polyvinylsilanes procure en outre à ces polysilanes une stabilité à l'air sans altération de la structure chimique et une bonne conservation de son aptitude à la réticulation sous bombardement électronique. On constate cependant une sensible majoration des teneurs en matières extractibles.

Les résultats sont portés dans le tableau 7. Ce tableau indique en outre la température mesurée par TGA en °C ainsi que le DMA correspondant à la température de transition vitreuse des polysilanes réticulés obtenus. Ainsi, on constate que la présence d'un stabilisant et aussi celle d'un diluant réactif vinylique permet l'obtention d'une température mesurée par TGA élevée, supérieure à celle du polysilane seul.

EXEMPLES 34 à 36

Des résultats similaires sont obtenus en remplaçant la NVP par le DVB (Voir tableau 8).

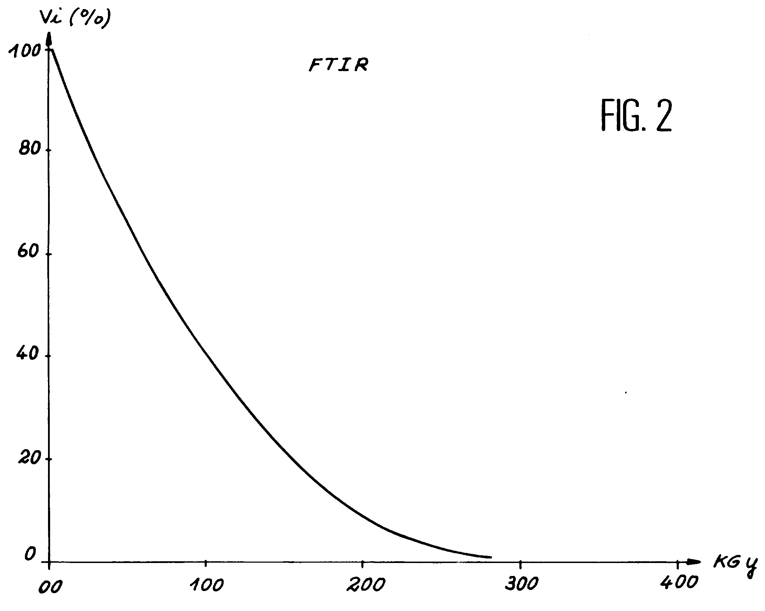

Dans le tableau 8 ci-joint, on montre en outre l'influence de la dose d'irradiation sur la formulation à base de polysilane et de diluant réactif, déterminée par spectrométrie FTIR. Ainsi, la quantité de matières extractibles diminue avec la dose d'irradiation. Ceci est confirmé par la courbe FTIR de la figure 2 donnant la quantité de liaison vinylique consommée en fonction de la dose d'irradiation par des électrons pour un polysilane de formulation identique à celle de l'exemple 34.

La quantité de matières extractibles diminue aussi en utilisant NVP plutôt que DVB.

EXEMPLE 37

Un mélange d'un polysilane, obtenu selon les conditions et proportions de l'exemple 6 avec un silazane de formule (A) avec n=4 dans des proportions 20 parties en poids de silazane pour 100 parties en poids de polysilane, a été bombardé par des électrons à une dose de 400 kGy. La teneur de matières extractibles n'est que de 0,4%.

EXEMPLES 38 à 40

Des anneaux ou modules de caractérisation N.O.L. à fibres de carbone ont été réalisés en utilisant des formulations conformes à l'invention. Ces anneaux NOL ont été obtenus par bobinage filamentaire d'une mèche de carbone de 3mm d'épaisseur constituée de 12000 filaments, imprégnée d'une formulation résultant d'une copolymérisation de 28% en mole de $Me_3SiCl$, de 54% en mole de $MeViSiCl_2$ et de 18% en mole de $MeSiHCl_2$.

Les fibres utilisées étaient des fibres de carbone à module intermédiaire (IM) comportant soit un ensimage spécifique (ES) du type acrylate pour les exemples 38 et 39, soit un ensimage commercial (G) du type époxy pour les fibres de l'exemple 40.

L'ensimage spécifique des fibres et notamment celui décrit dans le document FR-A-2 646 431.

La température d'imprégnation nécéssaire à la réalisation du composite est de 35°C.

Ces anneaux NOL ont été irradiés par un bombardement électronique à une dose de 400kGy en quarante passages de 10 kGy. Les caractéristiques en cisaillement de ces anneaux NOL ont été mesurées à température ambiante Ta. Les résultats sont portés dans le tableau 9.

Dans ce tableau, on a fait apparaître l'écart type σ des mesures de cisaillement ainsi que la teneur en résine des anneaux NOL.

Les valeurs de cisaillement obtenues pour des résines ayant un Tg de haute température sont excellentes compte tenu de la spécificité des propriétés mécaniques.

La mise en oeuvre des résines à base de polysilane ne pose pas de problème et elle conduit à des matériaux composites à bonne propriété d'interface, et de haute tenue thermique.

D'autres pièces en matériau composite à base de polysilane comme des viroles inter-étages de propulseur de fusées, obtenues par bobinage filamentaire peuvent être envisagées.

En outre, d'autres techniques de fabrication, comme par exemple le drapage ou l'injection, peuvent être envisagées. En effet, certaines des formulations décrites précédemment sont suffisamment fluides pour permettre leur injection dans un substrat de fibres de carbone obtenu notamment par tissage.

TABLEAU 1

| POLYSILANE PVS : évolution des caractéristiques (RoY[1]/$MeViSiCl_2$/$MeHSiCl_2$ : 28/55/17) | | | | | | | |
|---|---|---|---|---|---|---|---|
| N° EX. | NATURE DU POLYSILANE | AVANT EB | | | APRES EB | | |
| | | (1) $\overline{M}n$ | I | % (2) $-CH=CH_2$ | °C;5% TGA(3) | Pyrolyse TGA (4) | Mat. Ext.% |
| 1 | PVS1 (-SiMe3) | 750 | 5 | 19 | 400 | 62% | <1 |
| 2 | PVS2(-Me) | 780 | 12,5 | 23 | 500 | 69% | <1 |

(1) Determiné par CES

(2) Déterminé pr RMN $^1H$

(3) Température à laquelle le produit présente une perte de 5%

(4) rendement pyrolytique à 900°C

TABLEAU 1a

| POLYSILANES VINYLIQUES PVi2 et PVS2 | | | | | | |
|---|---|---|---|---|---|---|
| EX. | NOM | AVANT EB | | | APRES EB | |
| | | $\overline{M}n$ | I | % $-CH=CH_2$ | %Mat Ext | TGA (°C, 5%) |
| a | PVi1 $Me_3Si$- | 800 | 5 | 19 | 15-17 | - |
| b | PVi2 Me - | 620 | 7 | 23 | <1 | 450°c |

TABLEAU 2

| EVOLUTION DE L'INDICE DE DISPERSITE $\bar{M}w/\bar{M}n$ SELON LA NATURE DU TRAITEMENT FINAL DES POLYSILANES | | | | | | | | | | |
|---|---|---|---|---|---|---|---|---|---|---|
| EX. | NATURE DES POLYSILANES | (%) | | | | $I=\bar{M}w/\bar{M}n$ | | | | |
| | | MONOMERES | | | | | | ViMgBr* | | |
| | | MeVi $SiCl_2$ | MeHSi $Cl_2$ | $Me_2Si$ $Cl_2$ | MeI | L | LH | 0,5 | 2 | 3 |
| 3 à 6 | PVS2 | 54 | 18 | - | 28 | 5 | 12-63 | 12 | 6-7 | 5,3 |
| 7 à 9 | $PVi_2$ | 72 | - | - | 28 | 10 | 17-70 | 8 | 6-7 | - |
| 10 et 11 | $PMeVi_2$ | 36 | - | 36 | 28 | 2 | 3,5 | - | 2,4 | - |
| 12 et 13 | $PVSMe_2$ | 41 | 10 | 20 | 28 | 2 | 11 | - | - | 4 |

*$\times 10^{-3}$ mol/l

TABLEAU 3

| SUIVI PAR FTIR DE L'OXYDATION DES POLYSILANES PVS SELON LE TRAITEMENT FINAL $RoY^1/MeViSiCl_2/MeHSiCl_2$ : 28/54/18 | | | | | | |
|---|---|---|---|---|---|---|
| EX. | COMPOSE BOUT DE CHAINE | | Durée de l'oxydation (min) | | | |
| | % | | | | ViMgBr $\times 10^{-3m}$ mol/l | |
| | $Me_3SiCl$ | MeI | L | LH | 0,5 | 3 |
| 14 à 16 | 28 | - | <15 | 15 | 60 | >240 |
| 17 et 18 | - | 28 | <15 | <15 | - | >240 |

TABLEAU 4

| POLYSILANE PVS2 PREPARE A PARTIR DE MeI, $MeViSiCL_2$ et $MeHSiCl_2$ : (28/54/18) | | | | | | | | | | |
|---|---|---|---|---|---|---|---|---|---|---|
| EX. | REACTIF DE GRIGNARD | $\bar{M}w$ | $\bar{M}n$ | I | $CH=CH_2$ | Suivi oxydation (h) | | | | Stabilité en pot |
| | | | | | | 0 | 1 | 4 | 24 | |
| 19 | MeMgBr | 4400 | 840 | 5,2 | 20 | 0 | 0,1 | 0,4 | 0,7 | faible |
| 20 | ViMgBr | 4100 | 700 | 5,8 | 21 | 0 | 0 | 0 | 0,4 | OUI |
| 21 | BuLi | 8000 | 1000 | 8 | 6 | 0 | 0 | 0 | 0,5 | OUI |

TABLEAU 5

| DEFINITION DES FONCTIONS | | | | | | | | |
|---|---|---|---|---|---|---|---|---|
| * EX. | NATURE DES POLYSILANES | (%) MONOMERES | | | | AVANT EB | | APRES EB |
| | | | | | | Teneur des fonctions (%) | | |
| | | MeVi $SiCl_2$ | MeHSi $Cl_2$ | $Me_2Si$ $Cl_2$ | Mn | Si-Vi | SiH | 400kGy Mat Ext (%) |
| 22 | PVS1 | 54 | 18 | - | 750 | 30-35 | 10-15 | <1 |

* En présence de $Me_3SiCl$ à une quantité pour faire 100%.

TABLEAU 5 (suite)

| DEFINITION DES FONCTIONS | | | | | | | | |
|---|---|---|---|---|---|---|---|---|
| * EX. | NATURE DES POLYSILANES | (%) MONOMERES | | | | AVANT EB<br>Teneur des fonctions (%) | | APRES EB |
| | | MeVi $SiCl_2$ | MeHSi $Cl_2$ | $Me_2Si\ Cl_2$ | Mn | Si-Vi | SiH | 400kGy Mat Ext (%) |
| 23 | PVi1 | 72 | - | - | 800 | 39 | 0 | 16 |
| 24 | PMeVi1 | 42 | - | 21 | 800 | 28 | 0 | 11,5 |
| 25 | PMeVi1 | 36 | - | 36 | 1000 | 20 | 0 | 5 |
| CONTRE EX. | PS1 | - | 72 | - | - | 0 | 80 | 100 |

* En présence de $Me_3SiCl$ à une quantité pour faire 100%.

TABLEAU 6

| EX. | AVANT EB | | APRES EB | |
|---|---|---|---|---|
| | Nature du polysilane | NVP % | % Mat. Ext. | Nature |
| 26 | PVi 1 | 0 | 8 | oligosilane $Si\text{-}CH{=}CH_2$ |
| 27 | PVi 1 | 3 | 6,5 | idem + races NVP |

TABLEAU 7

| POLYSILANE PVS ($M_3SiCl/MeSiViCl_2/MeSiHCl_2$) Intérêt d'un stabilisant (28/54/18) | | | | | | |
|---|---|---|---|---|---|---|
| EX. | AVANT EB | | | APRES EB | | |
| | Ionol ppm | NVP | AIR* | % 400kGy Mat.Ext.** | TGA °C | DMA °C |
| 28 | 0 | 0 | - | <1 | - | 330 |
| 29 | 50 | 0 | + | 3 | - | |
| 30 | 100 | 0 | + | 4,5 | | |
| 31 | 200 | 0 | + | 4,5 - 9 | 390 | 320 |
| 32 | 0 | 10 à 40 | - | <2 - 3 | 402 | 330 |
| 33 | 200 | 20 | + | 5,4 | 365 | 320 |

* Atmosphère lors de l'ionisation

** Après EB à 40 Mrad.

TABLEAU 8

| OPTIMISATION DE LA DOSE - EMPLOI DVB OU NVP | | | | | | |
|---|---|---|---|---|---|---|
| EX. | PARTIES EN POIDS | | % MAT. EXT. SELON DOSE | | | |
| | PVS1 | DILUANT | 200 kGy | 300kGy | 400kGy | 500kGy |
| 34 | 100 | - | 6,9 | 2,4 | 1,5 | 0,8 |
| 35 | 100 | DVB 20 | 69 | 42 | 19 | 11 |
| 36 | 100 | NVP 20 | 5 | 1,4 | 1 | 0,9 |

TABLEAU 9

| ANNEAU NOL | | | |
|---|---|---|---|
| N° NOL | 38 | 39 | 40 |
| Nature des fibres | IM7(ES) | IM7(ES) | IM7(G) |
| % résine en poids | 30,4 | 31,7 | 32,2 |
| Cisail. Ta° (MPa) | 40 $\sigma$ = 4,8 | 43 $\sigma$ = 1,3 | 36 $\sigma$ = 5,6 |

**Revendications**

**1.** Procédé de préparation d'un polysilane réticulé, caractérisé en ce que l'on soumet à un rayonnement ionisant choisi parmi les rayons X et un bombardement électronique, une formulation réticulable par rayonnement ionisant comprenant au moins un polysilane à au moins une terminaison vinylique, obtenu en effectuant les étapes suivantes :

a) - faire réagir en phase liquide un composé $RoY^1$ en présence d'un métal alcalin fondu avec au moins un premier monomère ayant au moins une fonction vinylique de formule (I) :

$$CH_2 = CH - R^1 - \underset{X^1}{\overset{X^1}{Si}} - R^2 \qquad (I)$$

pour former au moins un polysilane halogéné à fonction vinylique, soluble dans la phase liquide, avec $X^1$ et $Y^1$ identiques ou différents représentant un atome d'halogène, $R^1$ représentant une liaison covalente simple ou un radical hydrocarboné saturé ou insaturé, substitué ou non, Ro représentant un radical hydrocarboné saturé ou insaturé éventuellement silicié et $R^2$ représentant un atome d'hydrogène ou un radical hydrocarboné saturé ou insaturé, substitué ou non ;
b) - séparer la phase liquide des phases solides ;
c) - réaliser une substitution nucléophile des atomes d'halogène du polysilane dissous dans la phase liquide par hydrolyse ou par l'action d'un organométallique, et
d) - extraire le polysilane substitué de la phase liquide.

**2.** Procédé de fabrication d'un matériau composite comportant des fibres de renfort noyées dans une matrice organique, consistant à imprégner les fibres d'une formulation réticulable par rayonnement ionisant contenant au moins un polysilane à au moins une terminaison vinylique et à soumettre les fibres imprégnées à un rayonnement ionisant choisi parmi les rayons X et un bombardement électronique, le polysilane de la formulation étant obtenu en effectuant les étapes suivantes :

a) - faire réagir en phase liquide un composé $RoY^1$ en présence d'un métal alcalin fondu avec au moins un premier monomère ayant au moins une fonction vinylique de formule (I) :

$$CH_2 = CH - R^1 - \underset{X^1}{\overset{X^1}{Si}} - R^2 \qquad (I)$$

pour former au moins un polysilane halogéné à fonction vinylique, soluble dans la phase liquide, avec $X^1$ et $Y^1$ identiques ou différents représentant un atome d'halogène, $R^1$ représentant une liaison covalente simple ou un radical hydrocarboné saturé ou insaturé, substitué ou non, Ro représentant un radical hydrocarboné saturé ou insaturé éventuellement silicié et $R^2$ représentant un atome d'hydrogène ou un radical hydrocarboné saturé ou insaturé, substitué ou non ;

b) - séparer la phase liquide des phases solides ;

c) - réaliser une substitution nucléophile des atomes d'halogène du polysilane dissous dans la phase liquide par hydrolyse ou par l'action d'un organométallique, et

d) - extraire le polysilane substitué de la phase liquide.

**3.** Procédé selon la revendication 1 ou 2, caractérisé en ce que la formulation contient en outre au moins un diluant réactif à terminaison vinylique copolymérisable sous rayonnement ionisant avec le polysilane.

**4.** Procédé selon la revendication 3, caractérisé en ce que le diluant réactif est la N-vinylpyrrolidone.

**5.** Procédé selon l'une quelconque des revendications précédentes, caractérisé en ce que la formulation contient au moins un inhibiteur radicalaire.

**6.** Procédé selon l'une quelconque des revendications précédentes, caractérisé en ce que la formulation contient au moins un silazane à terminaison vinylique.

**7.** Procédé selon l'une quelconque des revendications précédentes, caractérisé en ce que la substitution nucléophile est réalisée avec un organométallique.

**8.** Procédé selon l'une quelconque des revendications précédentes, caractérisé en ce que la substitution nucléophile est réalisée avec un organomagnésien $RMgY^2$ ou un organolithié RLi où R représente un radical hydrocarboné saturé ou insaturé, substitué ou non et $Y^2$ représente un atome d'halogène.

**9.** Procédé selon la revendication 8, caractérisé en ce que R représente un radical hydrocarboné à terminaison vinylique.

**10.** Procédé selon l'une quelconque des revendications précédentes, caractérisé en ce que $RoY^1$ est non silicié.

**11.** Procédé selon l'une quelconque des revendications précédentes, caractérisé en ce que $RoY^1$ est un halogénure de méthyle.

**12.** Procédé selon l'une quelconque des revendications précédentes, caractérisé en ce que $RoY^1$ est $CH_3I$.

**13.** Procédé selon l'une quelconque des revendications précédentes, caractérisé en ce que l'étape (a) est réalisée en présence d'un second monomère ayant au moins une liaison Si-H de formule (II) :

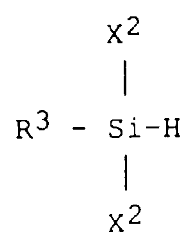

(II)

dans laquelle $X^2$ est un halogène et $R^3$ un atome d'hydrogène ou un radical hydrocarboné, saturé ou non, substitué ou non.

**14.** Procédé selon l'une quelconque des revendications précédentes, caractérisé en ce que le rapport des fonctions SiVi/SiH où Vi représente $CH_2$=CH-$R^1$- est choisi de 2 à 3,3.

**15.** Procédé selon l'une quelconque des revendications précédentes, caractérisé en ce que l'étape (a) est réalisée en présence d'un troisième monomère de formule (III) :

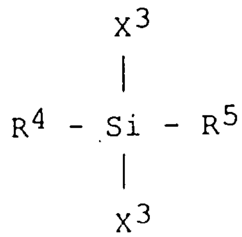

(III)

dans laquelle $R^4$ et $R^5$ qui peuvent être identiques ou différents représentent un atome d'hydrogène, un radical hydrocarboné saturé ou insaturé, substitué ou non.

**16.** Procédé selon la revendication 15, caractérisé en ce que le troisième monomère comporte au moins une fonction choisie parmi les fonctions époxy, acrylique, ester.

**17.** Procédé selon l'une quelconque des revendications 2 à 16, caractérisé en ce que les fibres sont des fibres de carbone.

**18.** Procédé selon l'une quelconque des revendications 13 à 17, caractérisé en ce que $R^3$ est un radical hydrocarboné non substitué.

**19.** Procédé de préparation d'un polysilane réticulable sous rayons X ou bombardement électronique, comportant les étapes suivantes :

a) - faire réagir en phase liquide un composé $RoY^1$ en présence d'un métal alcalin fondu avec au moins un premier monomère ayant au moins une fonction vinylique de formule (T) :

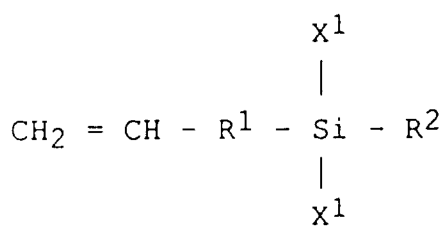

(I)

pour former au moins un polysilane halogéné à fonction vinylique, soluble dans la phase liquide, avec $X^1$ et $Y^1$ identiques ou différents représentant un atome d'halogène, $R^1$ représentant une liaison covalente simple ou un radical hydrocarboné saturé ou insaturé, substitué ou non, Ro représentant un radical hydrocarboné saturé ou insaturé éventuellement silicié et $R^2$ représentant un atome d'hydrogène ou un radical hydrocarboné saturé ou insaturé, substitué ou non ;
b) - séparer la phase liquide des phases solides ;
c) - réaliser une substitution nucléophile des atomes d'halogène du polysilane dissous dans la phase liquide par hydrolyse ou par l'action d'un organométallique, et
d) - extraire le polysilane substitué de la phase liquide.

**20.** Procédé selon la revendication 19, caractérisé en ce que la substitution nucléophile est réalisée avec un organométallique.

**21.** Procédé selon la revendication 19 ou 20, caractérisé en ce que la substitution nucléophile est réalisée avec un organomagnésien $RMgY^2$ ou un organolithié RLi où R représente un radical hydrocarboné saturé ou insaturé, substitué ou non et $Y^2$ représente un atome d'halogène.

**22.** Procédé selon la revendication 21, caractérisé en ce que R représente un radical hydrocarboné à terminaison vinylique.

**23.** Procédé selon l'une quelconque des revendications 19 à 22, caractérisé en ce que $RoY^1$ est non silicié.

**24.** Procédé selon l'une quelconque des revendications 19 à 23, caractérisé en ce que $RoY^1$ est un halogénure de méthyle.

**25.** Procédé selon l'une quelconque des revendications 19 à 24, caractérisé en ce que $RoY^1$ est $CH_3I$.

**26.** Procédé selon l'une quelconque des revendications 19 à 25, caractérisé en ce que l'étape (a) est réalisée en présence d'un second monomère ayant au moins une liaison Si-H de formule (II) :

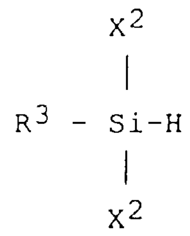

(II)

dans laquelle $X^2$ est un halogène et $R^3$ un atome d'hydrogène ou un radical hydrocarboné, saturé ou non, substitué ou non.

**27.** Procédé selon l'une quelconque des revendications 19 à 26, caractérisé en ce que le rapport des fonctions SiVi/SiH où Vi représente $CH_2$=CH-$R^1$- est choisi de 2 à 3,3.

**28.** Procédé selon l'une quelconque des revendications 19 à 27, caractérisé en ce que l'étape (a) est réalisée en présence d'un troisième monomère de formule (III) :

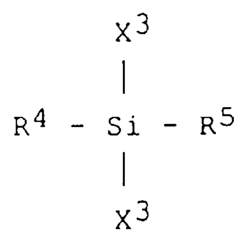

(III)

dans laquelle $R^4$ et $R^5$ qui peuvent être identiques ou différents représentent un atome d'hydrogène, un radical hydrocarboné saturé ou insaturé, substitué ou non.

**29.** Procédé selon la revendication 28, caractérisé en ce que le troisième monomère comporte au moins une fonction ester.

**30.** Procédé selon l'une quelconque des revendications 26 à 29, caractérisé en ce que $R^3$ est un radical hydrocarboné non substitué.

## Patentansprüche

**1.** Verfahren zur Herstellung eines härtbaren Polysilans, dadurch gekennzeichnet, daß eine durch ionisierende Strahlung härtbare Formel einer ionisierenden Strahlung von X-Strahlen und Elektronenbeschuß ausgesetzt wird, wobei die Formel mindestens ein Polysilan mit mindestens einem Vinylende enthält, das durch folgende Schritte hergestellt wird:

a) - die Reaktion einer Verbindung $RoY^1$ in der Flüssig-Phase in Anwesenheit eines Alkalimetalls, das mit mindestens einem ersten Monomer mit mindestens einer Vinylfunktion folgender Formel (I)

$$CH_2 = CH - R^1 - \underset{X^1}{\overset{X^1}{\overset{|}{\underset{|}{Si}}}} - R^2 \qquad (I)$$

verbunden wird, um mindestens ein halogenhaltiges Polysilan mit Vinylfunktion zu bilden, das in der Flüssig-Phase auflösbar ist, wobei $X^1$ und $Y^1$ identisch oder verschieden sind und ein Halogenatom darstellen, $R^1$ eine kovalente einfache Verbindung oder ein gesättigtes oder ungesättigtes, substituiertes oder nicht substituiertes Hydrocarbonradikal ist, Ro ein gesättigtes oder nicht gesättigtes, eventuell siliziumhaltiges Hydrocarbonradikal 30 ist und $R^2$ ein Wasserstoffatom oder ein gesättigtes oder ungesättigtes, substituiertes oder nicht substituiertes Hydrocarbonradikal ist;

b) - das Trennen der Flüssig-Phase von den Feststoff-35 Phasen;

c) - das Durchführen einer nukleophilen Substitution der in der Flüssig-Phase aufgelösten Halogenatome des Polysilans durch Hydrolyse oder Einwirken einer Organometallverbindung, und

d) - das Extrahieren des substituierten Polysilans der Flüssig-Phase.

**2.** Verfahren zur Herstellung eines Verbundwerkstoffes 10 mit Verstärkungsfasern in einer organischen Matrix, das daraus besteht, daß die Fasern mit einer durch ionisierende Strahlung härtbaren Formel getränkt werden, die mindestens ein Polysilan mit mindestens einem Vinylende enthält, und die getränkten Fasern einer ionisierenden Strahlung aus X-Strahlen und Elektronenbeschuß ausgesetzt werden, wobei das Polysilan der Formel durch folgende Schritte hergestellt wird:

a) - die Reaktion einer Verbindung $RoY^1$ in der Flüssig-Phase in Anwesenheit eines Alkalimetalls, das mit mindestens einem ersten Monomer mit mindestens einer Vinylfunktion folgender Formel (I)

$$CH_2 = CH - R^1 - \underset{X^1}{\overset{X^1}{\overset{|}{\underset{|}{Si}}}} - R^2 \qquad (I)$$

verbunden wird, um mindestens ein halogenhaltiges Polysilan mit Vinylfunktion zu bilden, das in der Flüssig-Phase auflösbar ist, wobei $X^1$ und $Y^1$ identisch oder verschieden sind und ein Halogenatom darstellen, $R^1$ eine kovalente einfache Verbindung oder ein gesättigtes oder ungesättigtes, substituiertes oder nicht substituiertes Hydrocarbonradikal ist, Ro ein gesättigtes oder nicht gesättigtes, eventuell siliziumhaltiges Hydrocarbonradikal ist und $R^2$ ein Wasserstoffatom oder ein gesättigtes oder ungesättigtes, substituiertes oder nicht substituiertes Hydrocarbonradikal ist;

b) - das Trennen der Flüssig-Phase von den Feststoff-Phasen;

c) - das Durchführen einer nukleophilen Substitution der in der Flüssig-Phase aufgelösten Halogenatome des Polysilans durch Hydrolyse oder Einwirken einer Organometallverbindung, und

d) - das Extrahieren des substituierten Polysilans der Flüssig-Phase.

**3.** Verfahren nach Anspruch 1 oder 2, dadurch gekennzeichnet, daß die Formel des weiteren mindestens ein reaktives Verdünnungsmittel mit Vinylende enthält, das unter ionisierender Strahlung mit dem Polysilan copolymerisierbar

ist.

**4.** Verfahren nach Anspruch 3, dadurch gekennzeichnet, daß das reaktive Verdünnungsmittel N-Vinylpyrrolidon ist.

**5.** Verfahren nach einem der oben genannten Ansprüche, dadurch gekennzeichnet, daß die Formel mindestens einen radikalartigen Inhibitor enthält.

**6.** Verfahren nach einem der oben genannten Ansprüche, dadurch gekennzeichnet, daß die Formel mindestens ein Silasan mit Vinylende enthält.

**7.** Verfahren nach einem der oben genannten Ansprüche, dadurch gekennzeichnet, daß die nukleophile Substitution mit einer Organometallverbindung durchgeführt wird.

**8.** Verfahren nach einem der oben genannten Ansprüche, dadurch gekennzeichnet, daß die nukleophile Substitution mit einer Organomagnesiumverbindung $RMgY^2$ oder einer Organolithiumverbindung RLi durchgeführt wird, wobei R ein gesättigtes oder ungesättigtes, substituiertes oder nicht substituiertes Hydrocarbonradikal ist und $Y^2$ ein Halogenatom ist.

**9.** Verfahren nach Anspruch 8, dadurch gekennzeichnet, daß R ein Hydrocarbonradikal mit Vinylende ist.

**10.** Verfahren nach einem der oben genannten Ansprüche, dadurch gekennzeichnet, daß $RoY^1$ nicht siliziumhaltig ist.

**11.** Verfahren nach einem der oben genannten Ansprüche, dadurch gekennzeichnet, daß $RoY^1$ ein Methylhalogenid ist.

**12.** Verfahren nach einem der oben genannten Ansprüche, dadurch gekennzeichnet, daß $RoY^1$ $Ch_3I$ ist.

**13.** Verfahren nach einem der oben genannten Ansprüche, dadurch gekennzeichnet, daß Schritt (a) in Anwesenheit eines zweiten Monomers durchgeführt wird, das mindestens eine Si-H-Verbindung folgender Formel (II) hat:

$$\begin{array}{c} X^2 \\ | \\ R^3 - Si - H \\ | \\ X^2 \end{array} \qquad (II)$$

wobei $X^2$ ein Halogen ist und $R^3$ ein Wasserstoffatom oder ein gesättigtes oder ungesättigtes, substituiertes oder nicht substituiertes Hydrocarbonradikal ist.

**14.** Verfahren nach einem der oben genannten Ansprüche, dadurch gekennzeichnet, daß das Verhältnis der Funktionen SiVi/SiH zwischen 2 und 3,3 liegt, wobei Vi $CH_2=CH-R^1$ ist.

**15.** Verfahren nach einem der oben genannten Ansprüche, dadurch gekennzeichnet, daß Schritt (a) in Anwesenheit eines dritten Monomers folgender Formel (III):

$$\begin{array}{c} X^3 \\ | \\ R^4 - Si - R^5 \\ | \\ X^3 \end{array} \qquad (III)$$

durchgeführt wird, wobei $R^4$ und $R^5$, die identisch oder unterschiedlich sein können, ein Wasserstoffatom, ein

gesättigtes oder ungesättigtes, substituiertes oder nicht substituiertes Hydrocarbonradikal darstellen.

**16.** Verfahren nach Anspruch 15, dadurch gekennzeichnet, daß das dritte Monomer mindestens eine Funktion unter den Funktionen Epoxid, Akryl oder Ester umfaßt.

**17.** Verfahren nach einem der Ansprüche 2 bis 16, dadurch gekennzeichnet, daß die Fasern Kohlenstoffasern sind.

**18.** Verfahren nach einem der Ansprüche 13 bis 17, dadurch gekennzeichnet, daß $R^3$ ein nicht substituiertes Hydrocarbonradikal ist.

**19.** Verfahren zur Vorbereitung eines durch X-Strahlen oder Elektronenbeschuß härtbaren Polysilans, das folgende Schritte umfaßt:

a) - die Reaktion einer Verbindung $RoY^1$ in der Flüssig-Phase in Anwesenheit eines Alkalimetalls, das mit mindestens einem ersten Monomer mit mindestens einer Vinylfunktion folgender Formel (I)

$$\begin{array}{c} \qquad\qquad\qquad\quad X^1 \\ \qquad\qquad\qquad\quad | \\ CH_2 = CH - R^1 - Si - R^2 \\ \qquad\qquad\qquad\quad | \\ \qquad\qquad\qquad\quad X^1 \end{array} \qquad (I)$$

verbunden wird, um mindestens ein halogenhaltiges Polysilan mit Vinylfunktion zu bilden, das in der Flüssig-Phase auflösbar ist, wobei $X^1$ und $Y^1$ identisch oder verschieden sind und ein Halogenatom darstellen, $R^1$ eine kovalente einfache Verbindung oder ein gesättigtes oder ungesättigtes, substituiertes oder nicht substituiertes Hydrocarbonradikal ist, Ro ein gesättigtes oder nicht gesättigtes, eventuell siliziumhaltiges Hydrocarbonradikal ist und $R^2$ ein Wasserstoffatom oder ein gesättigtes oder ungesättigtes, substituiertes oder nicht substituiertes Hydrocarbonradikal ist;

b) - das Trennen der Flüssig-Phase von den Feststoff-Phasen;

c) - das Durchführen einer nukleophilen Substitution der in der Flüssig-Phase aufgelösten Halogenatome des Polysilans durch Hydrolyse oder Einwirken einer Organometallverbindung, und

d) - das Extrahieren des substituierten Polysilans der Flüssig-Phase.

**20.** Verfahren nach Anspruch 19, dadurch gekennzeichnet, daß die nukleophile Substitution mit einer Organometallverbindung durchgeführt wird.

**21.** Verfahren nach Anspruch 19 oder 20, dadurch gekennzeichnet, daß die nukleophile Substitution mit einer Organomagnesiumverbindung $RMgY^2$ oder einer Organolithiumverbindung RLi durchgeführt wird, wobei R ein gesättigtes oder ungesättigtes, substituiertes oder nicht substituiertes Hydrocarbonradikal ist und $Y^2$ ein Halogenatom ist.

**22.** Verfahren nach Anspruch 21, dadurch gekennzeichnet, daß R ein Hydrocarbonradikal mit Vinylende ist.

**23.** Verfahren nach einem der Ansprüche 19 bis 22, dadurch gekennzeichnet, daß $RoY^1$ nicht siliziumhaltig ist.

**24.** Verfahren nach einem Ansprüche 19 bis 23, dadurch gekennzeichnet, daß $RoY^1$ ein Methylhalogenid ist.

**25.** Verfahren nach einem der Ansprüche 19 bis 24, dadurch gekennzeichnet, daß $RoY^1$ $Ch_3I$ ist.

**26.** Verfahren nach einem der Ansprüche 19 bis 25, dadurch gekennzeichnet, daß Schritt (a) in Anwesenheit eines zweiten Monomers durchgeführt wird, das mindestens eine Si-H- Verbindung folgender Formel (II) hat:

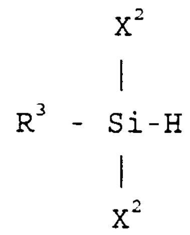 (II)

wobei $X^2$ ein Halogen ist und $R^3$ ein Wasserstoffatom oder ein gesättigtes oder ungesättigtes, substituiertes oder nicht substituiertes Hydrocarbonradikal ist.

**27.** Verfahren nach einem der Ansprüche 19 bis 26, dadurch gekennzeichnet, daß das Verhältnis der Funktionen SiVi/SiH zwischen 2 und 3,3 liegt, wobei Vi $CH_2=CH-R^1$ ist.

**28.** Verfahren nach einem der Ansprüche 19 bis 27, dadurch gekennzeichnet, daß Schritt (a) in Anwesenheit eines dritten Monomers folgender Formel (III):

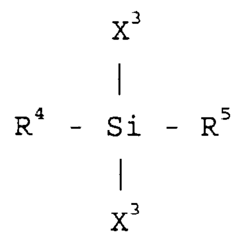 (III)

durchgeführt wird, wobei $R^4$ und $R^5$, die identisch oder unterschiedlich sein können, ein Wasserstoffatom, ein gesättigtes oder ungesättigtes, substituiertes oder nicht substituiertes Hydrocarbonradikal darstellen.

**29.** Verfahren nach Anspruch 28, dadurch gekennzeichnet, daß das dritte Monomer mindestens eine Esterfunktion umfaßt.

**30.** Verfahren nach einem der Ansprüche 26 bis 29, dadurch gekennzeichnet, daß $R^3$ ein nicht substituiertes Hydrocarbonradikal ist.

**Claims**

**1.** Process for the preparation of a crosslinked polysilane, characterized in that a formulation crosslinkable by ionizing radiation incorporating at least one polysilane having at least one vinyl termination is subject to ionizing radiation chosen from among X-rays and electron bombardment and is obtained by carrying out the following stages:

a) reacting in the liquid phase a compound $RoY^1$ in the presence of a melted alkali metal with at least one first monomer having at least one vinyl function of formula (I):

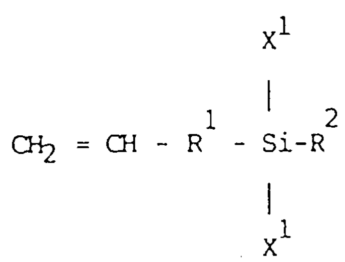 (I)

for forming at least one halogenated polysilane with a vinyl function, which is soluble in the liquid phase, $X^1$

and $Y^1$ being the same or different and representing a halogen atom, $R^1$ representing a single covalent bond or a substituted or unsubstituted, saturated or unsaturated hydrocarbon radical, Ro representing an optionally silicon-containing, saturated or unsaturated, hydrocarbon radical and $R^2$ representing a hydrogen atom or a substituted or unsubstituted, saturated or unsaturated, hydrocarbon radical;

b) separating the liquid phase from the solid phases;

c) carrying out a nucleophilic substitution of the halogen atoms of the polysilane dissolved in the liquid phase; and

d) extracting the substituted polysilane from the liquid phase.

**2.** Process for the production of a composite material incorporating reinforcing fibres embedded in an organic matrix, consisting of impregnating the fibres of a formulation crosslinkable by ionizing radiation containing at least one polysilane having at least one vinyl termination and subjecting the impregnated fibres to an ionizing radiation chosen from among X-rays and an electron bombardment, the polysilane of the formulation being obtained by performing the following stages:

a) reacting in the liquid phase a compound $RoY^1$ in the presence of a melted alkali metal with at least one first monomer having at least one vinyl function of formula (I):

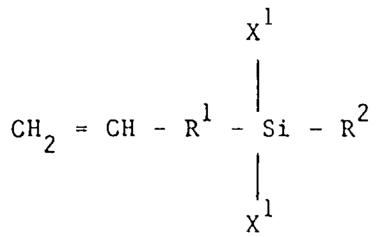

(I)

for forming at least one halogenated polysilane with a vinyl function, which is soluble in the liquid phase, $X^1$ and $Y^1$ being the same or different and representing a halogen atom, $R^1$ representing a single covalent bond or a substituted or unsubstituted, saturated or unsaturated hydrocarbon radical, Ro representing an optionally silicon-containing, saturated or unsaturated, hydrocarbon and $R^2$ representing a hydrogen atom or a substituted or unsubstituted, saturated or unsaturated, hydrocarbon radical;

b) separating the liquid phase from the solid phases;

c) carrying out a nucleophilic substitution of the halogen atoms of the polysilane dissolved in the liquid phase; and

d) extracting the substituted polysilane from the liquid phase.

**3.** Process according to claim 1 or 2, characterized in that the formulation also contains at least one reactive diluent having a vinyl termination copolymerizable under ionizing radiation with the polysilane.

**4.** Process according to claim 3, characterized isn that the reactive diluent is N-vinyl pyrrolidone.

**5.** Process according to any one of the preceding claims, characterized in that the formulation contains at least one radical inhibitor.

**6.** Process according to any one of the preceding claims, characterized in that the formulation contains at least one silazane having a vinyl termination.

**7.** Process according to any one of the preceding claims, characterized in that the nucleophilic substitution is obtained with an organometallic compound.

**8.** Process according to any one of the preceding claims, characterized in that the nucleophilic substitution is obtained with an organomagnesium compound $RMgY^2$ or an organolithium compound RLi, in which R represents a sasturated or unsaturated, substituted or unsubstituted, hydrocarbon radical and $Y^2$ represents a halogen atom.

**9.** Process according to claim 8, characterized in that R represents a hydrocarbon radical having a vinyl termination.

**10.** Process according to any one of the preceding claims, characterized in that $RoY^1$ does not contain silicon.

**11.** Process according to any one of the preceding claims, characterized in that $RoY^1$ is a methyl halide.

**12.** Process according to any one of the preceding claims, characterized in that $RoY^1$ is $CH_3I$.

**13.** Process according to any one of the preceding claims, characterized in that stage (a) is performed in the presence of a second monomer having at least one Si-H bond of formula (II):

$$\begin{array}{c} X^2 \\ | \\ R^3 - Si - H \\ | \\ X^2 \end{array} \qquad (II)$$

in which $X^2$ is a halogen and $R^3$ a hydrogen atom or a saturated or unsaturated, substituted or unsubstituted, hydrocarbon radical.

**14.** Process according to any one of the preceding claims, characterized in that the ratio of the functions SiVi/Si-H, in which Vi represents $CH = CH\text{-}R^1$- is chosen between 2 and 3.3.

**15.** Process according to any one of the preceding claims, characterized in that stage a) is performed in the presence of a third monomer of formula (III):

$$\begin{array}{c} X^3 \\ | \\ R^4 - Si - R^5 \\ | \\ X^3 \end{array} \qquad (III)$$

in which $R^4$ and $R^5$, which can be the same or different, represent a hydrogen atom, or a substituted or unsubstituted, saturated or unsaturated, hydrocarbon radical.

**16.** Process according to claim 15, characterized in that the third monomer has at least one function chosen from among the epoxy, acrylic or ester functions.

**17.** Process according to any one of the claims 2 to 16, characterized in that the fibres are carbon fibres.

**18.** Process according to any one of the claims 13 to 17, characterized in that $R^3$ is an unsubstituted hydrocarbon radical.

**19.** Process for the preparation of a polysilane crosslinkable under X-rays or electron bombardment, incorporating the following stages:

a) reacting in the liquid phase a compound $RoY^1$ in the presence of a melted alkali metal with at least one first monomer having at least one vinyl function of formula (I):

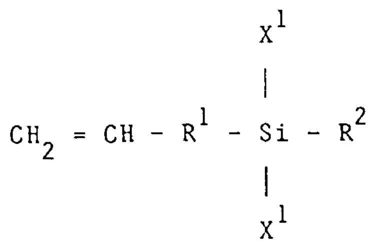

(I)

for forming at least one halogenated polysilane with a vinyl function, which is soluble in the liquid phase, $X^1$ and $Y^1$ being the same or different and representing a halogen atom, $R^1$ representing a single covalent bond or a substituted or unsubstituted, saturated or unsaturated hydrocarbon radical, Ro representing an optionally silicon-containing, saturated or unsaturated, hydrocarbon radical and $R^2$ representing a hydrogen atom or a substituted or unsubstituted, saturated or unsaturated, hydrocarbon radical;

b) separating the liquid phase from the solid phases;

c) carrying out a nucleophilic substitution of the halogen atoms of the polysilane dissolved in the liquid phase; and

d) extracting the substituted polysilane from the liquid phase.

**20.** Process according to claim 19, characterized in that the nucleophilic substitution is carried out with an organometallic compound.

**21.** Process according to claim 19 or 20, characterized in that the nucleophilic substitution is carried out with an organomagnesium compound $RMgY^2$ or an organolithium compound RLi, in which R represents a saturated or unsaturated, substituted or unsubstituted, hydrocarbon radical and $Y^2$ represents a halogen atom.

**22.** Process according to claim 21, characterized in that R represents a hydrocarbon radical with a vinyl termination.

**23.** Process according to any one of the claims 19 to 22, characterized in that $RoY^1$ is not silicon-containing.

**24.** Process according to any one of the claims 19 to 23, characterized in that $RoY^1$ is a methyl halide.

**25.** Process according to any one of the claims 19 to 24, characterized in that $RoY^1$ is $CH_3I$.

**26.** Process according to any one of the claims 19 to 25, characterized in that stage a) is performed in the presence of a second monomer having at least one Si-H bond of formula (II):

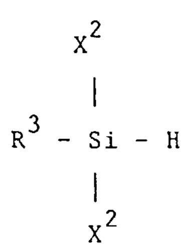

(II)

in which $X^2$ is a halogen and $R^3$ a hydrocarbon atom or a saturated or unsaturated, substituted or unsubstituted, hydrocarbon radical.

**27.** Process according to any one of the claims 19 to 26, characterized in that the ratio of the SiVi/Si-H functions, in which Vi represents $CH_2=CH-R^1$-, is chosen between 2 and 3.3.

**28.** Process according to any one of the claims 19 to 27, characterized in that stage a) is performed in the presence of a third monomer of formula (III):

$$\begin{array}{c} X^3 \\ | \\ R^4 - Si - R^5 \\ | \\ X^3 \end{array} \qquad (III)$$

in which $R^4$ and $R^5$, which can be the same or different, represent a hydrogen atom or a saturated or unsaturated, substituted or unsubstituted, hydrocarbon radical.

**29.** Process according to claim 28, characterized in that the third monomer has at least one ester function.

**30.** Process according to any one of the claims 26 to 29, characterized in that $R^3$ is an unsubstituted hydrocarbon radical.

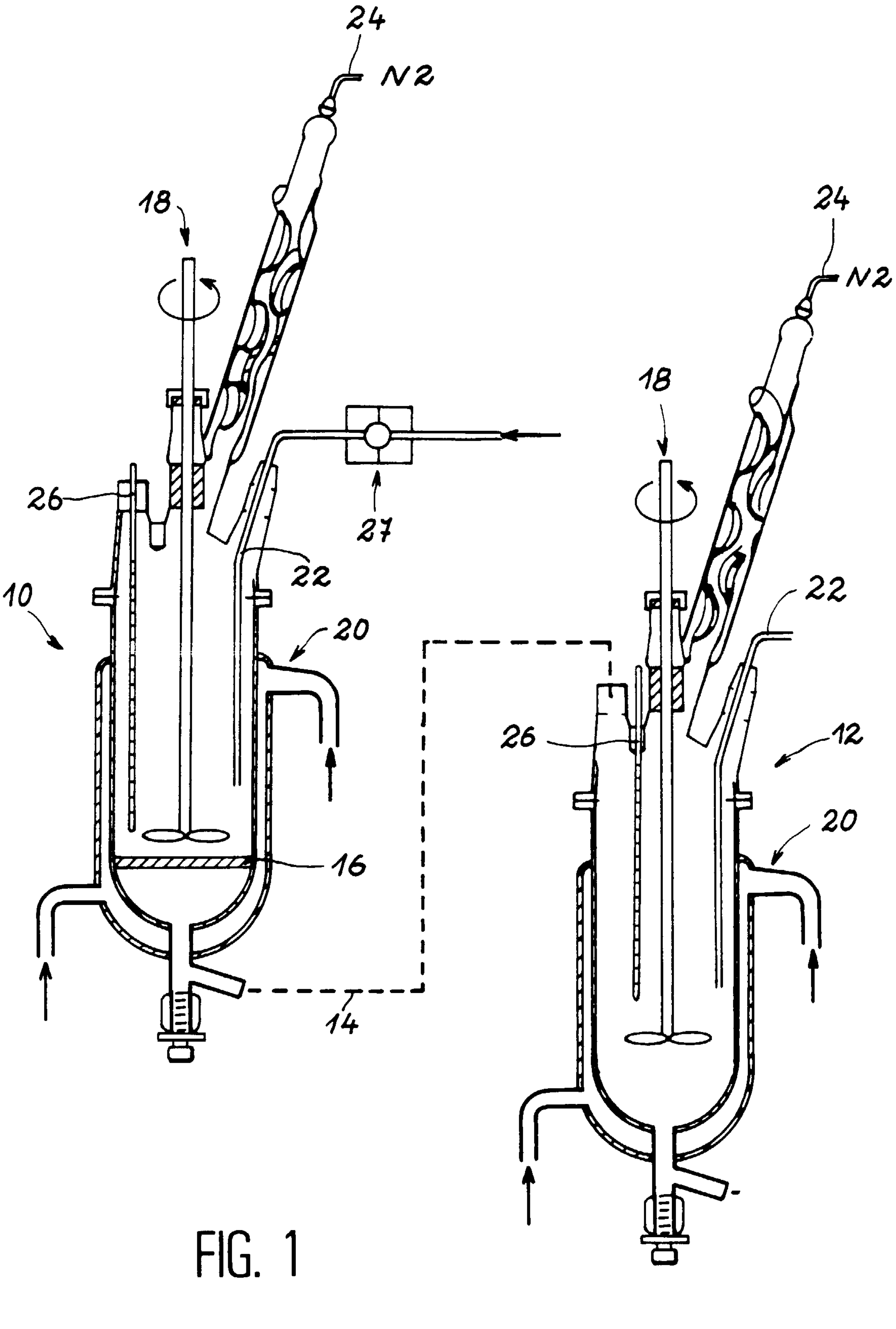


FIG. 1

FIG. 2